# EUROPÄISCHE PATENTSCHRIFT

(11) **EP 0 446 999 B1**
(45) Veröffentlichungstag und Bekanntmachung des Hinweises auf die Patenterteilung: **28.06.1995**
(21) Anmeldenummer: 91200534.5
(22) Anmeldetag: 12.03.1991
(51) Int. Cl.: C03B 37/016, C03B 19/12

(54) **Verfahren und Vorrichtung zum Herstellen von Glaskörpern**
Method and device for the production of glass bodies
Procédé et dispositif pour la production de corps vitreux

(30) Priorität: 14.03.1990 DE 4008108; 14.03.1990 DE 4008109
(43) Veröffentlichungstag der Anmeldung: 18.09.1991
(73) Patentinhaber: Philips Patentverwaltung GmbH, 22335 Hamburg (DE); Philips Electronics N.V., 5621 BA Eindhoven (NL)
(72) Erfinder: Clasen, Rolf, Dipl.-Phys., Dr., W-5100 Aachen (DE)
(74) Vertreter: Volmer, Georg, Dipl.-Ing.

(56) Entgegenhaltungen:
- EP-A- 0 200 242
- EP-A- 0 276 886

## Beschreibung

Die Erfindung betrifft ein Verfahren zum Herstellen von Glaskörpern, bei dem aus dem Ausgangsmaterial für den Glaskörper in Form einer wässerigen Suspension mit hochdispersem Feststoffanteil ein poröser Grünkörper geformt und dieser anschließend gereinigt und gesintert wird, wobei der Grünkörper durch Trennung der Phasen der Suspension mittels Elektrophorese abgeschieden wird, derart, daß der Feststoffanteil der Suspension auf einer porösen Abscheidemembran mit Poren eines Durchmessers, der kleiner als der mittlere Teilchendurchmesser der in der Suspension vorhandenen Feststoffteilchen ist, abgeschieden wird, wobei die Abscheidemembran zwischen der Anode und der Kathode angeordnet und der Raum zwischen der Abscheidemembran und der Anode mit einer elektrisch leitenden Flüssigkeit gefüllt wird.

Die Erfindung betrifft weiter eine Vorrichtung zur Durchführung des erfindungsgemäßen Verfahrens.

Das eingangs genannte Verfahren ist insbesondere geeignet für die Herstellung von hochreinen Glaskörpern. Hochreine Kieselglasrohre werden z.B. als Substratrohre für die Herstellung von optischen Wellenleitern mittels eines Innenbeschichtungsverfahrens gebraucht, wo nur Verunreinigungen an Nebengruppenelementen und OH-Gruppen von wenigen ppb toleriert werden können. Es können z.B. strukturierte Vorformen für optische Wellenleiter hergestellt werden, in-dem besonders reine Kieselglasstäbe mit mit fluordotierten Mantelgläsern kombiniert werden.

Scheiben aus hochreinem Kieselglas werden beispielsweise als Maskenträger in der Halbleitertechnologie benötigt, wobei eine Transmission von Strahlung im ultravioletten Spektralbereich (Wellenlänge 180 nm) erforderlich ist. Aus diesem Grund sind auch für diesen Anwendungszweck von Kieselglas nur sehr geringe Verunreinigungen, insbesondere an Metallionen, zulässig.

Aus der deutschen Offenlegungsschrift DE-A- 3 511 451 sind ein Verfahren und eine Vorrichtung zur Herstellung von Glaskörpern bekannt, mit denen aus dem Ausgangsmaterial für den Glaskörper in Form einer wässerigen Suspension mit hochdispersem Feststoffanteil ein poröser Grünkörper geformt und dieser anschließend gereinigt und gesintert wird, wobei der Grünkörper durch Trennung der Phasen der Suspension mittels Elektrophorese abgeschieden wird.

Bei der elektrophoretischen Abscheidung aus wässerigen Suspensionen kommt es durch die Entladung von H+- bzw. OH⁻- Ionen an den Elektroden zu lokalen Änderungen des pH-Wertes in der Suspension, die das kolloidchemische System verändern können. Ein Einfluß auf die elektrophoretische Abscheidung ist insbesondere dann zu beobachten, wenn lange Abscheidezeiten infolge geringer Abscheideraten oder infolge hoher Feststoffausbeute genügend Zeit für eine Durchmischung der Suspension in der Abscheidekammer ergeben oder die der Suspension beigefügten Elektrolyte aufgrund ihres Dissoziationsgrades oder der Konzentration nur eine geringe Pufferwirkung haben.

Veränderungen des effektiven pH-Wertes während der elektrophoretischen Abscheidung beeinflussen die Dichte des abgeschiedenen Formkörpers, wodurch Geometrieänderungen oder Risse bei den folgenden Bearbeitungsprozessen (Trocknen, Sintern) entstehen können.

Der Erfindung liegt die Aufgabe zugrunde, das eingangs genannte Verfahren so zu verbessern, daß Veränderungen des effektiven pH-Wertes bei der elektrophoretischen Abscheidung von Grünkörpern aus einer Suspension entgegengewirkt wird.

Diese Aufgabe wird mit dem erfindungsgemäßen Verfahren dadurch gelöst, daß eine poröse Hilfsmembran zwischen der Abscheidemembran und der Kathode in einem Abstand zur Abscheidemembran und zur Kathode angeordnet wird, die Poren eines Durchmessers hat, der kleiner als der mittlere Teilchendurchmesser der in der Suspension vorhandenen Feststoffteilchen ist und daß der Raum zwischen der Hilfsmembran und der Kathode mit einer elektrisch leitenden Flüssigkeit gefüllt wird.

Bei der elektrophoretischen Abscheidung der Feststoffpartikel in Form von Ausgangsmaterial für einen Glaskörper aus einer wässerigen Suspension ergibt sich das Problem, daß an der Anode nicht nur die negativ geladenen Feststoffpartikel, insbesondere sind dies Quarzglasteilchen, abgeschieden werden, sondern es wird bei der Abscheidung bei Spannungen größer 1 V gleichzeitig Sauerstoff frei, der sich ebenfalls an der Anode abscheidet und damit in die anwachsende Feststoffschicht eingebaut wird und zu Poren innerhalb des auf diese Weise gebildeten Grünkörpers führt, die nur unter erhöhtem Aufwand (d.h. bei Temperaturen höher als 1550 °C) dichtsinterbar sind. Dieses Problem kann umgangen werden, wenn beispielsweise eine nichtwässerige Suspension eingesetzt wird. Es bringt für eine industrielle Fertigung von hochreinen, blasen- und schlierenfreien Quarzglaskörpern jedoch erhebliche Vorteile, wenn mit wässerigen Suspensionen gearbeitet werden kann. Zur Vermeidung des Sauerstoffeinbaus in die anwachsende Feststoffschicht wird der Feststoffanteil der Suspension auf einer porösen Membran mit Poren eines Durchmessers, der kleiner als der mittlere Teilchendurchmesser der in der Suspension vorhandenen Feststoffteilchen ist, abgeschieden, wobei die Abscheidemembran zwischen der Anode und der Hilfsmembran angeordnet und die Räume zwischen der Abscheidemembran und der Anode einerseits und zwischen der Hilfsmembran und der Kathode andererseits mit elektrisch leitender Flüssigkeit gefüllt wird.

Nach vorteilhaften Weiterbildungen des Verfahrens nach der Erfindung wird als Ausgangsmaterial für den Glaskörper eine wässerige Suspension, die SiO₂-Partikel eines Durchmessers im Bereich von 10 bis 500 nm, vorzugsweise 15 bis 100 nm, mit einem mittleren Teilchendurchmesser von 40 nm bei einem Feststoff:Wasser-Gewichtsverhältnis von 1:1 bis 1:4 eingesetzt. Hiermit ist der Vorteil verbunden, daß Grunkörper erreicht werden können mit einer vorteilhaft hohen Dichte, die 35 bis 60%, vorzugsweise 50% der Dichte kompakten Quarzglases beträgt.

Nach einer vorteilhaften weiteren Ausbildung des Verfahrens nach der Erfindung werden eine poröse Abscheidemembran und eine poröse Hilfsmembran eingesetzt, die Poren eines Porendurchmessers von < 100 nm, insbesondere im Bereich von < 10 nm und > 0,14 nm haben. Der Porendurchmesser der Abscheidemembran ist dabei so gewählt, daß die hochdispersen Feststoffpartikel mit einem mittleren Teilchendurchmesser von 40 nm auf der Abscheidemembran festgehalten werden, kleinere Ionen, wie z.B. OH-Ionen mit einem Durchmesser von 0,14 nm, die Abscheidemembran jedoch passieren können.

Vorteilhafterweise kann sowohl für die Abscheidemembran als auch für die Hilfsmembran eine poröse Kunststoffolie eingesetzt werden, wie sie z.B. für Dialyseverfahren eingesetzt wird.

Nach einer vorteilhaften Ausgestaltung des Verfahrens nach der Erfindung wird der Suspension ein ionogener Zusatzstoff zugegeben, der den pH-Wert der Suspension in Richtung auf den basischen Bereich (pH ≦ 10) verschiebt. Hiermit sind mehrere Vorteile verbunden: Der ionogene Zusatzstoff bewirkt zunächst eine Dispergierung der Feststoffteilchen (insbesondere im Ultraschallfeld) und fördert die gleichmäßige Vernetzung der Feststoffpartikel in der Suspension sowohl in bezug auf die Vernetzungsgeschwindigkeit als auch in bezug auf die Erhöhung der Bindungskraft der Feststoffpartikel untereinander.

Auf diese Weise sind homogenere, stabilisierte Suspensionen zu erreichen, was wiederum den Vorteil hat, daß im aus der Suspension geformten Grünkörper ein homogenes Porenvolumen vorliegt, so daß niedrigere Sintertemperaturen zum Erhalten eines blasen- und schlierenfreien Glaskörpers ausreichen, als wenn ein Grünkörper mit einem sehr inhomogenen Porenvolumen zu einem Glaskörper vergleichbarer Qualität gesintert werden müsste. Dies hat zur Folge, daß kostengünstigere Sinteröfen eingesetzt werden können; bei Sintertemperaturen bis zu 1550 °C können Öfen mit einem SiC-Futter eingesetzt werden, bei Sintertemperaturen, die über 1550 °C liegen, müssen Öfen mit höchsttemperaturfestem Futter, z.B. aus MoSi₂, eingesetzt werden; diese Öfen sind teurer als mit SiC ausgekleidete Öfen. Ein weiterer Vorteil einer möglichst niedrigen Sintertemperatur ist, daß mit steigender Sintertemperatur Rekristallisationseffekte auf der Oberfläche des Sinterkörpers zunehmen, die insbesondere dann störend und unerwünscht sind, wenn die Glaskörper als Vorformen für optische Wellenleiter verwendet werden sollen, da die mechanischen Eigenschaften sich stark verschlechtern (Gefahr der Rißbildung).

Wird nach einer vorteilhaften weiteren Ausgestaltung des Verfahrens nach der Erfindung als ionogener Zusatzstoff eine Ammoniumverbindung eingesetzt, ergibt sich der Vorteil, daß der Zusatzstoff leicht flüchtig ist und in einem nachfolgenden Reinigungs-Erhitzungsschritt rückstandslos aus dem Grünkörper entfernt werden kann, so daß Quarzglaskörper einer sehr hohen Reinheit herstellbar sind. Durch den Zusatz einer Ammoniumverbindung werden Grünkörper einer relativ hohen Festigkeit erreicht, da an den Kontaktstellen zweier SiO₂-Primärpartikel eine Gelbildung auftritt. SiO₂ wird an den Kontaktstellen ausgeschieden und bildet eine Brückenschicht.

Wird der Suspension als ionogener Zusatzstoff eine 5%ige wässerige NH₄F-Lösung zugesetzt, kann eine Fluordotierung erreicht werden, die beispielsweise für die Herstellung von Mantelgäsern für optische Wellenleiter geeignet ist.

Nach einer vorteilhaften weiteren Ausgestaltung des Verfahrens nach der Erfindung wird der ionogene Zusatzstoff in einer Menge von 0,05 bis 5 Gew.%, bezogen auf den Feststoffanteil in der Suspension, zugegeben. Hiermit ist der Vorteil verbunden, daß der als Vernetzungsaktivator wirkende Zusatzstoff in einer solchen Menge vorliegt, daß gerade die Oberfläche der Feststoffpartikel in der Suspension mit Ionen des ionogenen Zusatzstoffes bedeckt ist. Die Menge des ionogenen Zusatzstoffes sollte nicht größer als 5 Gew.%, bezogen auf den Feststoffanteil der Suspension, sein, da sich die Viskosität der Suspension stark erhöht, was die elektrophoretische Abscheidung ungünstig beeinflußt.

Mit dem vorliegenden Verfahren kann vorteilhafterweise ein Schichtkörper durch Abscheiden mehrerer Schichten nacheinander aus unterschiedlich dotierten Suspensionen hergestellt werden. Dazu wird nach Erreichen einer gewünschten Schichtdicke des Grünkörpers die erste Suspension aus der Vorrichtung entfernt und der Abscheideprozeß mit einer zweiten, z.B. anders als die erste Suspension dotierten Suspension fortgesetzt. Das vorliegende Verfahren ist damit besonders geeignet, Vorformen für optische Wellenleiter herzustellen, die ein Stufenprofil des Brechungsindex aufweisen.

Ebenfalls ist es möglich, einen optischen Wellenleiter mit W-Profil durch Einbau einer Zwischenschicht mit niedrigerem Brechungsindex, der durch Anwendung einer Suspension mit entsprechender Dotierung erhalten wird, herzustellen. Dotierstoffe zur Veränderung des Brechungsindex eines Glaskörpers sind dem Fachmann bekannt; beispielsweise werden hierzu zur Erhöhung des Brechungsindex GeO₂ oder Al₂O₃ und zur Erniedrigung des Brechungsindex B₂O₃ oder Fluor verwendet. Mit dem vorliegenden Verfahren ist es auch möglich, durch Abscheidung einer Vielzahl von abgestuft dotierten Schichten einen Quarzglaskörper mit angenähert kontinuierlichem Brechungsindexverlauf herzustellen.

Eine Vorrichtung zur Durchführung des erfindungsgemäßen Verfahrens nach Anspruch 1 mit einem Gefäß, in dem eine der Form des herzustellenden Grünkörpers entsprechende poröse Abscheidemembran mit Poren eines Durchmessers, der kleiner ist als der Durchmesser der Feststoffpartikel in der Suspension, angeordnet ist und der Raum zwischen der Abscheidemembran und einer im Abstand zur Abscheidemembran auf der Innenwandung des Gefäßes angeordneten Anode mit einer elektrisch leitenden Flüssigkeit ausgefüllt ist und wobei die Anode und eine auf der der Innenwandung mit der Anode gegenüberliegenden Innenwandung des Gefäßes angeordnete Kathode über Elektrodenanschlüsse elektrisch verbunden sind, ist dadurch gekennzeichnet, daß zwischen der Abscheidemembran und der Kathode eine poröse Hilfsmembran angeordnet ist, daß der Raum zwischen der Abscheidemembran und der Hilfsmembran zur Aufnahme von nach Phasen zu trennendem Ausgangsmaterial in Form einer Suspension vorgesehen ist, daß der Raum zwischen der Hilfsmembran und der Kathode mit elektrisch leitender Flüssigkeit ausgefüllt ist und daß auch die Hilfsmembran Poren eines Durchmessers hat, der kleiner ist als der Durchmesser der Feststoffpartikel in der Suspension.

Mit der Erfindung ist der Vorteil verbunden, daß bei einer elektrophoretischen Abscheidung von kolloidalen Teilchen unter Einsatz sowohl einer Abscheide- als auch einer Hilfsmembran, also einer Doppelmembran, der pH-Wert in der Suspension und damit die elektrophoretische Abscheidung gezielt beeinflußt werden kann.

Ausführungsbeispiele der Erfindung werden nachfolgend beschrieben.
Es zeigt:

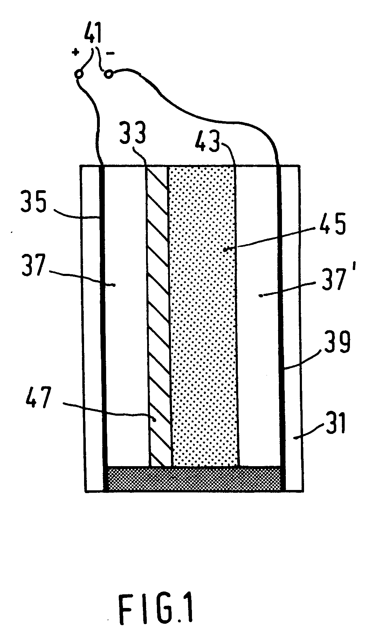

- Figur 1: schematische Schnittzeichnung einer Vorrichtung zur Abscheidung von plattenförmigen Grünkörpern.

Veränderungen des effektiven pH-Wertes während der elektrophoretischen Abscheidung beeinflussen, wie oben bereits ausgeführt, die Dichte des abgeschiedenen Formkörpers, wodurch Geometrieänderungen oder Risse bei den Folgeprozessen zur Bearbeitung des Grünkörpers wie Trocknen und Sintern entstehen können.

Dieses Problem kann nun mit dem vorliegenden Verfahren unter Anwendung der vorliegenden Vorrichtung gemäß Figur 1 dadurch umgangen werden, daß eine zweite Membran als Hilfsmembran vor der Kathode angeordnet wird. Dies ist in Figur 1 am Beispiel einer einfachen elektrophoretischen Abscheidezelle mit einem Gefäß 31 schematisch dargestellt. Eine Abscheidemembran 33 und eine Hilfsmembran 43 innerhalb des Gefäßes 31 bestehen vorteilhafterweise aus regenerierter Zellulose mit Poren eines Durchmessers ≦ 0,2 »m. Mit Vorteil kann eine Dialysemembran mit einem Porendurchmesser von ≦ 10 nm eingesetzt werden. Durch die zweite vor der Kathode 39 stehende Hilfsmembran 43 wird eine Vermischung von Suspension 45 mit elektrisch leitender Flüssigkeit 37' vor der Kathode 39, die einen höheren pH-Wert annimmt, durch Konvektionsströmungen vermieden.

Dadurch verändert die Suspension 45 während der Abscheidung von Feststoffpartikeln ihren pH-Wert auch unter den oben genannten, dem Grunde nach ungünstigen Bedingungen nicht mehr so, daß eine abgeschiedene Feststoffpartikelschicht 47, die den Grünkörper darstellt, beeinflußt wird. Vor den Elektroden 35, 39 ist elektrisch leitende Flüssigkeit in Form von Elektrolytlösungen 37, 37' vorhanden; diese Elektrolytlösungen sollten den gleichen Elektrolytzusatz wie die Suspension 45 aufweisen, um elektroosmotische Effekte zu minimieren. Die Elektroden 35, 39 sollten vorzugsweise aus Edelmetall wie z.B. Platinblech bestehen. Der Abstand zwischen den Elektroden 35, 39 und den Membranen 33, 43 wird durch elektrisch isolierende Abstandshalter am Boden des Gefäßes 31, die vorzugsweise aus einem elektrisch nichtleitenden Elastomer bestehen, bestimmt. Die Räume zwischen der Kathode 39 und der Hilfsmembran 43 einerseits und der Anode 35 und der Abscheidemembran 33 andererseits sollten so bemessen sein, daß entstehende Gasblasen ohne Probleme aufsteigen können;
eine Breite dieser Räume von etwa 3 bis 20 mm hat sich bewährt. Werden diese Räume breiter, steigen durch den höheren elektrischen Widerstand der gesamten Zelle die zur elektrophoretischen Abscheidung von Feststoffpartikeln aus der Suspension 45 notwendigen Spannungen und damit die Stromkosten unnötig an.

Neben der mit Figur 1 beschriebenen planaren Anordnung, mit der plattenförmige Grünkörper hergestellt werden können, lassen sich mit einer entsprechenden zylindersymmetrischen Anordnung auch Grünkörper in Rohrform herstellen.

Wird für die elektrisch leitende Flüssigkeit 37' in dem Raum nahe der Kathode 39 (kathodenahe Elektrolytkammer) ein anderer Elektrolyt als für die Suspension 45 verwendet, kann der pH-Wert in der Suspension 45 während der Abscheidung gezielt beeinflußt werden. So steigt der pH-Wert in der Suspension 45 an, wenn als Elektrolyt für die elektrisch leitende Flüssigkeit 37' Tetramethylammoniumhydroxyd (TMAH) verwendet wird. Analog hierzu fällt der pH-Wert in der Suspension 45, wenn der elektrisch leitenden Flüssigkeit 37' Flußsäure als Elektrolyt zugesetzt wird.

Gemäß Figur 1 ist in einem Gefäß 31 zur elektrophoretischen Abscheidung von planaren Grünkörpern in Form einer Feststoffpartikelschicht 47 eine Abscheidemembran 33 einer Fläche von 40x40 mm² in einem Abstand von 20 mm zu einer auf der Innenwandung des Gefäßes 31 angebrachten flächigen Anode 35 angeordnet. In einem Abstand von 20 mm zur Abscheidemembran 33 ist eine flächige Hilfsmembran 43 angeordnet, die sich in einem Abstand von 3 mm zu einer auf der der anodentragenden Innenwandung des Gefäßes 31 gegenüberliegenden Innenwandung des Gefäßes 31 angebrachten Kathode 39 befindet. Auf diese Weise werden eine anodennahe Elektrolytkammer zur Aufnahme von elektrisch leitender Flüssigkeit 37, eine Kammer zwischen Abscheidemembran 33 und Hilfsmembran 43 zur Aufnahme von Suspension 45 und eine kathodennahe Elektrolytkammer zur Aufnahme von elektrisch leitender Flüssigkeit 37' gebildet.

### Beispiel 1

Die zur Abscheidung des Grünkörpers eingesetzte Suspension ist auf folgende Weise hergestellt worden:
Es wurden 100 g eines hochdispersen Kieselglaspulvers mit einem Teilchendurchmesser im Bereich von 10 bis 100 nm und einem mittleren Teilchendurchmesser von etwa 40 nm in 165 ml einer 0,1%igen NH₄F-Lösung eingerührt und über eine Dauer von 15 min in einem Ultraschallbad dispergiert. Die Suspension wurde anschließend durch ein Kunststoffsieb mit einer Maschenweite von 125 »m gegossen, um grobe, noch nicht ausreichend dispergierte SiO₂-Teilchen zurückzuhalten.In die anodennahe Elektrolytkammer wurde eine wässerige 0,1%ige NH₄F-Lösung eines pH-Wertes im Bereich von 5,5 bis 5,7 und in die kathodennahe Elektrolytkammer wurde eine wässerige 0,1%ige NH₄HF₂-Lösung eines pH-Wertes von 3,0 eingefüllt.

Bei einer angelegten Gleichspannung von 15 V verringerte sich die Stromstärke von 140 auf 120 mA während einer Abscheidezeit von 5 min. Auf der Abscheidemembran 33 wurde eine gleichmäßig dicke Feststoffpartikelschicht 47 mit einer Trockenmasse von 1,25 g abgeschieden. Der pH-Wert in der Suspension 45 veränderte sich nicht meßbar.

In einem Referenzversuch mit lediglich einer Abscheidemembran (also ohne Hilfsmembran) wurde unter ansonsten gleichen Bedingungen zusätzlich an der Kathode die Ausbildung einer Feststoffpartikelschicht beobachtet, die eine Trockenmasse von 1,6 g aufwies. Die Trockenmasse der auf der Abscheidemembran 33 abgeschiedenen Schicht 47 war gleich. Der pH-Wert stieg während der Abscheidung von 5,0 auf 9,2.

### Beispiel 2

Es wurde wie zu Beispiel 1 beschrieben vorgegangen, jedoch wurde das SiO₂-Pulver in eine 0,45%ige TMAH-Lösung eingerührt. In die anodennahe und in die kathodennahe Elektrolytkammer wurde eine 0,45%ige TMAH-Lösung als elektrisch leitende Flüssigkeit 37, 37' eingefüllt; der pH-Wert betrug 12,5. Die Abscheidung einer Feststoffpartikelschicht 47 erfolgte bei einer Gleichspannung von 30 V, wobei die Stromstärke über eine Dauer von 5 min von 200 mA auf 320 mA anstieg. Die abgeschiedene Trockenmasse in der Schicht 47 betrug 8,88 g. Der pH-Wert der Suspension 45 veränderte sich geringfügig von 10,0 auf 11.

### Beispiel 3

Es wurde in gleicher Weise wie zu Beispiel 1 beschrieben vorgegangen, jedoch wurde das SiO₂-Pulver in eine 0,75%ige NH₄F-Lösung eingerührt. In die anodennahe Elektrolytkammer wurde eine 0,75%ige NH₄F-Lösung eingegossen, in die kathodennahe Elektrolytkammer wurde eine 0,75%ige TMAH-Lösung eines pH-Wertes von 12,5 eingefüllt. Der pH-Wert in der Suspension 45 stieg nach 5 min von 5,9 auf 9,2 an.

### Beispiel 4

Es wurde auf gleiche Weise wie zu Beispiel 3 beschrieben vorgegangen, jedoch wurde in die kathodennahe Elektrolytkammer eine 0,75%ige HF-Lösung eines pH-Wertes von 1,5 eingefüllt. Der pH-Wert in der Suspension 45 verringerte sich von 5,9 auf 4,3.

Nach Abscheidung der Feststoffschicht 47 wird die an Feststoff verarmte Restsuspension aus der Vorrichtung ausgegossen und die Abscheidemembran 33 wird von der abgeschiedenen Feststoffschicht 47 abgetrennt. Wird ein Membranschlauch zur Herstellung von rohrförmigen Grünkörpern eingesetzt, läßt sich dieser in schmalen Streifen spiralförmig ohne Beschädigung der glänzenden Oberfläche der abgeschiedenen Feststoffschicht (Grünkörper) abziehen.

Nach einer langsamen Trocknung über eine Dauer von 24 h wird der getrocknete Grünkörper mit einer Dichte von 52%, bezogen auf die Dichte kompakten Quarzglases, in 3 h auf eine Temperatur von 900 °C aufgeheizt und über eine Dauer von 4 h in einer strömenden Sauerstoffatmosphäre mit 6 Vol.% Chlorgaszusatz gereinigt. Die abschließende Sinterung zu einem blasen- und schlierenfreien transparenten Quarzglaskörper erfolgt bei einer Temperatur von 1500 °C in einer Heliumatmosphäre mit 2 Vol.% Chlorgaszusatz bei einer Absenkgeschwindigkeit des zu sinternden Grünkörpers von 3 mm/min durch den Ofen.
Es wurden Quarzglaskörper mit einer glänzenden, strukturfreien Oberfläche erhalten. Das auf diese Weise hergestellte Glas hatte eine Dichte von 2,20 g/cm³, einen Brechungsindex n_{D} = 1,458 und wies Verunreinigungen an Wasser und Übergangsmetallen von < 10 ppb auf.

## Patentansprüche

1. Verfahren zum Herstellen von Glaskörpern, bei dem aus dem Ausgangsmaterial für den Glaskörper in Form einer wässerigen Suspension (45) mit hochdispersem Feststoffanteil ein poröser Grünkörper geformt und dieser anschließend gereinigt und gesintert wird, wobei der Grünkörper durch Trennung der Phasen der Suspension mittels Elektrophorese abgeschieden wird, derart, daß der Feststoffanteil der Suspension auf einer porösen Abscheidemembran (33) mit Poren eines Durchmessers, der kleiner als der mittlere Teilchendurchmesser der in der Suspension vorhandenen Feststoffteilchen ist, abgeschieden wird, wobei die Abscheidemembran (33) zwischen der Anode (35) und der Kathode (39) angeordnet und der Raum zwischen der Abscheidemembran und der Anode mit einer elektrisch leitenden Flüssigkeit (37) gefüllt wird,
dadurch gekennzeichnet,
daß eine poröse Hilfsmembran (43) zwischen der Abscheidemembran (33) und der Kathode (39) in einem Abstand zur Abscheidemembran und zur Kathode angeordnet wird, die Poren eines Durchmessers hat, der kleiner als der mittlere Teilchendurchmesser der in der Suspension (45) vorhandenen Feststoffteilchen ist und daß der Raum zwischen der Hilfsmembran (43) und der Kathode (39) mit einer elektrisch leitenden Flüssigkeit (37') gefüllt wird.

2. Verfahren nach Anspruch 1,
dadurch gekennzeichnet,
daß als elektrisch leitende Flüssigkeit (37, 37') Wasser mit einem zugesetzten Elektrolyten in Form eines ionogenen Stoffes, der den pH-Wert der elektrisch leitenden Flüssigkeit in Richtung auf den basischen Bereich (pH ≦ 10) verschiebt, eingesetzt wird.

3. Verfahren nach Anspruch 2,
dadurch gekennzeichnet,
daß als ionogener Stoff eine Ammoniumverbindung, insbesondere eine 5%ige wässerige NH₄F-Lösung, zugesetzt wird.

4. Verfahren nach einem der vorhergehenden Ansprüche,
dadurch gekennzeichnet,
daß der Feststoffanteil der Suspension(45) bei einer Stromdichte von 0,1 bis 100 mA/cm² Elektrodenfläche abgeschieden wird.

5. Verfahren nach einem der vorhergehenden Ansprüche,
dadurch gekennzeichnet,
daß eine poröse Abscheidemembran (33) und eine poröse Hilfsmembran (43) eingesetzt werden, die Poren eines Porendurchmessers von < 100 nm, insbesondere im Bereich von < 10 nm und > 0,14 nm haben.

6. Verfahren nach Anspruch 5,
dadurch gekennzeichnet,
daß eine Abscheidemembran (33) und eine Hilfsmembran (43) aus poröser Kunststoffolie eingesetzt werden.

7. Verfahren nach einem der vorhergehenden Ansprüche,
dadurch gekennzeichnet,
daß eine Anode (35) aus einem nichtmetallischen, elektrisch gut leitenden Material eingesetzt wird.

8. Verfahren nach Anspruch 7,
dadurch gekennzeichnet,
daß eine Anode (35) aus Graphit eingesetzt wird.

9. Verfahren nach einem der Ansprüche 1 bis 6,
dadurch gekennzeichnet,
daß eine Anode (35) aus einem Edelmetall eingesetzt wird.

10. Verfahren nach Anspruch 9,
dadurch gekennzeichnet,
daß eine Anode (35) aus Platin eingesetzt wird.

11. Verfahren nach einem der vorhergehenden Ansprüche,
dadurch gekennzeichnet,
daß als Ausgangsmaterial für den Glaskörper eine wässerige Suspension (45) eingesetzt wird, die SiO₂-Partikel eines Durchmessers im Bereich von 10 bis 500 nm, vorzugsweise 15 bis 100 nm, mit einem mittleren Teilchendurchmesser von 40 nm enthält.

12. Verfahren nach Anspruch 11,
dadurch gekennzeichnet,
daß eine Suspension (45) mit einem Feststoff-Wasser-Gewichtsverhältnis von 1:1 bis 1:4 eingesetzt wird.

13. Verfahren nach den Ansprüchen 11 und 12,
dadurch gekennzeichnet,
daß der Suspension (45) ein ionogener Zusatzstoff zugegeben wird, der den pH-Wert der Suspension in Richtung auf den basischen Bereich (pH ≦ 10) verschiebt.

14. Verfahren nach Anspruch 13,
dadurch gekennzeichnet,
daß als ionogener Zusatzstoff eine Ammoniumverbindung, insbesondere eine 5%ige wässerige NH₄F-Lösung, zugesetzt wird.

15. Verfahren nach den Ansprüchen 11 bis 14,
dadurch gekennzeichnet,
daß der ionogene Zusatzstoff in einer Menge von 0,05 bis 5 Gew.%, bezogen auf den Feststoffanteil in der Suspension (45), zugegeben wird.

16. Verfahren nach einem der vorhergehenden Ansprüche,
dadurch gekennzeichnet,
daß der Elektrolyt der elektrisch leitenden Flüssigkeit (37,37') in einer der Konzentration des ionogenen Zusatzstoffes in der Suspension (45) entsprechenden Konzentration zugesetzt wird.

17. Vorrichtung zur Durchführung des Verfahrens nach den Ansprüchen 1 bis 16 mit einem Gefäß (31), in dem eine der Form des herzustellenden Grünkörpers (47) entsprechende poröse Abscheidemembran (33) mit Poren eines Durchmessers, der kleiner ist als der Durchmesser der Feststoffpartikel in der Suspension, angeordnet ist und der Raum zwischen der Abscheidemembran und einer im Abstand zur Abscheidemembran auf der Innenwandung des Gefäßes angeordneten Anode (35) mit einer elektrisch leitenden Flüssigkeit (37) ausgefüllt ist und wobei die Anode und eine auf der der Innenwandung mit der Anode gegenüberliegenden Innenwandung des Gefäßes angeordnete Kathode (39) über Elektrodenanschlüsse (41) elektrisch verbunden sind,
dadurch gekennzeichnet,
daß zwischen der Abscheidemembran und der Kathode eine poröse Hilfsmembran (43) angeordnet ist, daß der Raum zwischen der Abscheidemembran und der Hilfsmembran zur Aufnahme von nach Phasen zu trennendem Ausgangsmaterial in Form einer Suspension (45) vorgesehen ist, daß der Raum zwischen der Hilfsmembran und der Kathode mit elektrisch leitender Flüssigkeit (37') ausgefüllt ist und daß auch die Hilfsmembran Poren eines Durchmessers hat, der kleiner ist als der Durchmesser der Feststoffpartikel in der Suspension.

18. Vorrichtung nach Anspruch 17,
dadurch gekennzeichnet,
daß die Abscheidemembran (33) und die Hilfsmembran (43) Poren eines Durchmessers < 10 nm und > 0,14 nm haben.

19. Vorrichtung nach den Ansprüchen 17 und 18,
dadurch gekennzeichnet,
daß die Abscheidemembran (33) und die Hilfsmembran (43) aus porösem Kunststoff bestehen.

20. Vorrichtung nach einem der vorhergehenden Ansprüche,
dadurch gekennzeichnet,
daß die Elektroden (35, 39) aus Edelmetall bestehen.

21. Vorrichtung nach Anspruch 20,
dadurch gekennzeichnet,
daß die Elektroden (35, 39) aus Platin bestehen.

22. Vorrichtung nach einem der Ansprüche 17 bis 19,
dadurch gekennzeichnet,
daß die Elektroden (35, 39) aus einem nichtmetallischen, elektrisch leitfähigen Material bestehen.

23. Vorrichtung nach Anspruch 22,
dadurch gekennzeichnet,
daß die Elektroden (35, 39) aus Graphit bestehen.

## Claims

1. A method of manufacturing glass bodies, in which a porous green body is formed from the starting material for the glass body, being an aqueous suspension (45) comprising a highly disperse solids content, which green body is then purified and sintered, and deposited through electrophoresis by separating the phases of the suspension, in such a manner that the solids content of the suspension is deposited on a porous deposition membrane (33) having pores whose diameter is smaller than the average particle diameter of the solid particles present in the suspension, said deposition membrane (33) being arranged between the anode (35) and the cathode (39), and the space between said membrane and the anode being filled with an electrically conducting liquid (37), characterized in that a porous auxiliary membrane (43) is arranged between and at a distance from the deposition membrane (33) and the cathode (39), said auxiliary membrane having pores with a diameter which is smaller than the average particle diameter of the solid particles present in the suspension (45), and in that the space between the auxiliary membrane (43) and the cathode (39) is filled with an electrically conducting liquid (37').

2. A method as claimed in Claims 1 and 2, characterized in that water, to which an electrolyte in the form of an ionogenic substance is added, is used as the electrically conducting liquid (37, 37'), said ionogenic substance moving the pH-value of the electrically conducting liquid towards alkalinity (pH ≦ 10).

3. A method as claimed in Claim 2, characterized in that an ammonium compound, in particular a 5% aqueous NH₄F-solution, is used as the ionogenic substance.

4. A method as claimed in any one of the preceding Claims, characterized in that the solids content of the suspension (45) is deposited at a current density of 0.1 to 100 mA/cm² of electrode surface.

5. A method as claimed in any one of the preceding Claims, characterized in that a porous deposition membrane (33) and a porous auxiliary membrane (43) are used having pores with a diameter < 100 nm, in particular in the range from < 10 nm to > 0.14 nm.

6. A method as claimed in Claim 5, characterized in that a deposition membrane (33) and an auxiliary membrane (43) of porous synthetic resin foil are used.

7. A method as claimed in any one of the preceding Claims, characterized in that an anode (35) of a nonmetallic, properly electrically conducting material is used.

8. A method as claimed in Claim 7, characterized in that an anode (35) of graphite is used.

9. A method as claimed in any one of Claims 1 to 6, characterized in that an anode (35) of a noble metal is used.

10. A method as claimed in Claim 9, characterized in that an anode (35) of platinum is used.

11. A method as claimed in any one of the preceding Claims, characterized in that an aqueous suspension (45) comprising SiO₂-particles having a diameter in the range from 10 to 500 nm, preferably 15 to 100 nm, with an average particle diameter of 40 nm, is used as the starting material for the glass body.

12. A method as claimed in Claim 11, characterized in that a suspension (45) having a solid-water weight ratio of 1:1 to 1:4 is used.

13. A method as claimed in Claims 11 and 12, characterized in that an ionogenic additive is added to the suspension (45), which additive moves the pH-value of the suspension towards alkalinity (pH ≦ 10).

14. A method as claimed in Claim 13, characterized in that an ammonium compound, in particular a 5% aqueous NH₄F-solution, is added as the ionogenic additive.

15. A method as claimed in Claims 11 to 14, characterized in that the ionogenic additive is added in a quantity of 0.05 to 5 wt. % of the solids content in the suspension (45).

16. A method as claimed in any one of the preceding Claims, characterized in that the electrolyte is added to the electrically conducting liquid (37, 37') in a concentration which corresponds to the concentration of the ionogenic additive in the suspension (45).

17. A device for carrying out the method as claimed in Claims 1 to 16, which device comprises a vessel (31) in which a porous deposition membrane (33) is accommodated whose shape corresponds to that of the green body (47) to be manufactured and whose pores have a smaller diameter than the diameter of the solid particles in the suspension, and the space between the deposition membrane and an anode (35) arranged at a distance therefrom at the inner wall of the vessel is filled with an electrically conducting liquid (37), the anode and a cathode (39) arranged at the inner wall of the vessel opposite the inner wall at which the anode is arranged, being electrically interconnected through electrode connections (41), is characterized in that a porous auxiliary membrane (43) is arranged between the deposition membrane and the cathode, in that the space between the deposition membrane and the auxiliary membrane is intended for holding starting material in the form of a suspension (45) which can he separated into phases, in that the space between the auxiliary membrane and the cathode is filled with electrically conducting liquid (37'), and in that also the auxiliary membrane has pores the diameter of which is smaller than the diameter of the solid particles in the suspension.

18. A device as claimed in Claim 17, characterized in that the deposition membrane (33) and the auxiliary membrane (43) have pores with a diameter < 10 nm and > 0.14 nm.

19. A device as claimed in Claims 17 and 18, characterized in that the deposition membrane (33) and the auxiliary membrane (43) consist of porous synthetic resin.

20. A device as claimed in any one of the preceding Claims, characterized in that the electrodes (35, 39) consist of a noble metal.

21. A device as claimed in Claim 20, characterized in that the electrodes (35, 39) consist of platinum.

22. A device as claimed in any one of Claims 17 to 19, characterized in that the electrodes (35, 39) consist of a nonmetallic, electrically conducting material.

23. A device as claimed in Claim 22, characterized in that the electrodes (35, 39) consist of graphite.

## Revendications

1. Procédé de fabrication de corps vitreux, suivant lequel en partant du matériau de base pour le corps vitreux en forme d'une suspension aqueuse (45) présentant une teneur élevée en matières solides bien dispersées il est formé un corps vert poreux qui est subséquemment nettoyé et fritté, le corps vert étant déposé par séparation des phases de la suspension au moyen d'électrophorèse de manière que la teneur en matières solides contenues dans la suspension est déposée sur une membrane de dépot poreuse (33) présentant des pores dont le diamètre est inférieur au diamètre de particule moyen des particules solides présentes dans la suspension, la membrane de dépôt (33) étant disposée entre l'anode (35) et la cathode (39) et l'espace séparant la membrane de dépôt et l'anode étant rempli d'un liquide électriquement conducteur (37), caractérisé en ce qu'une membrane auxiliaire poreuse (43) est disposée entre la membrane de dépôt (33) et la cathode (39) espacée de la membrane de dépôt et de la cathode, en ce que les pores présentent un diamètre qui est inférieur au diamètre de particule moyen des particules solides présentes dans la suspension (45) et en ce que l'espace entre la membrane auxiliaire (43) et la cathode (39) est rempli d'un liquide électriquement conducteur (37').

2. Procédé selon la revendication 1, caractérisé en ce que l'on utilise comme liquide électriquement conducteur (37, 37') de l'eau à laquelle on a ajouté un électrolyte en forme d'une matière ionique déplaçant le pH du liquide électriquement conducteur dans la direction du domaine basique (pH ≦ 10).

3. Procédé selon la revendication 2, caractérisé en ce que l'on utilise comme matière ionique un composé d'ammonium, notamment une solution de NH₄F contenant 5% d'eau.

4. Procédé selon l'une quelconque des revendications précédentes, caractérisé en ce que la partie en matières solides de la suspension (45) est déposée dans le cas d'une intensité de courant comprise entre 0,1 et 100 mA/cm² de surface d'électrode.

5. Procédé selon l'une quelconque des revendications précédentes, caractérisé en ce que l'on utilise une membrane de dépot poreuse (33) et une membrane auxiliaire poreuse (43) présentant des pores ayant un diamètre < 100 nm, particulièrement comprise entre < 10 nm et > 0,14 nm.

6. Procédé selon la revendication 5, caractérisé en ce que l'on utilise une membrane de dépôt (33) et une membrane auxiliaire (43) en feuille synthétique poreuse.

7. Procédé selon l'une quelconque des revendications précédentes, caractérisé en ce que l'on utilise une anode (35) en matériau non métallique électriquement bien conducteur.

8. Procédé selon la revendication 7, caractérisé en ce que l'on utilise une anode (35) en graphite.

9. Procédé selon l'une quelconque des revendications précédentes 1 à 6, caractérisé en ce que l'on utilise une anode (35) en métal précieux.

10. Procédé selon la revendication 9, caractérisé en ce que l'on utilise une anode (35) en platine.

11. Procédé selon l'une quelconque des revendications précédentes, caractérisé en ce que l'on utilise comme matériau de départ pour le corps vitreux une suspension aqueuse (45) contenant des particules de SiO₂ présentant un diamètre compris entre 10 et 500 nm, avantageusement compris entre 15 et 100 nm, et ayant un diamètre de particule moyen de 40 nm.

12. Procédé selon la revendication 11, caractérisé en ce que l'on utilise une suspension (45) dont le rapport de poids en matières solides:eau est compris entre 1:1 et 1:4.

13. Procédé selon les revendications 11 et 12, caractérisé en ce que l'on ajoute à la suspension (45) un additif ionique déplaçant le pH de la suspension dans la direction du domaine basique (pH ≦ 10).

14. Procédé selon la revendication 14, caractérisé en ce que l'on utilise comme additif ionique un composé d'ammonium, notamment une solution de NH₄F contenant 5% d'eau.

15. Procédé selon les revendications 11 à 14, caractérisé en ce que l'on ajoute l'additif ionique dans une quantité comprise entre 0,05 et 5% en poids par rapport à la partie en matières solides contenues dans la suspension (45).

16. Procédé selon l'une quelconque des revendications précédentes, caractérisé en ce que l'électrolyte est ajouté au liquide électriquement conducteur (37, 37') dans une concentration qui correspond à celle de l'additif ionique contenu dans la suspension (45).

17. Dispositif conçu pour la mise en oeuvre du procédé selon l'une quelconque des revendications 1 à 16, et comportant un récipient (31) dans lequel est disposé une membrane de dépôt poreuse (33) dont la forme correspond à celle du corps vert à fabriquer (47) et qui présente des pores dont le diamètre est inférieur à celui des particules en matière solide contenues dans la suspension, et dans lequel l'espace entre la membrane de dépôt et une anode (35) espacée de ladite membrane de dépôt et disposés sur la paroi intérieure du récipient est rempli d'un liquide électriquement conducteur (37), l'anode étant électriquement interconnectée par l'intermédiaire de connexions d'électrode (41) à la cathode (39) disposée contre la paroi intérieure du récipient vis-à-vis de la paroi intérieure contre laquelle est disposée l'anode, caractérisé en ce qu'une membrane auxiliaire poreuse (43) est disposée entre la membrane de dépôt et la cathode, en ce que l'espace entre la membrane de dépôt et la membrane auxiliaire est conçue pour contenir en forme d'une suspension (45) du matériau de départ pouvant être séparé en phases, en ce que l'espace entre la membrane auxiliaire et la cathode est rempli d'un liquide électriquement conducteur (37') et en ce que la membrane auxiliaire présente également des pores dont le diamètre est inférieur à celui des particules en matière solide contenues dans la suspension.

18. Dispositif selon la revendication 17, caractérisé en ce que la membrane de dépôt (33) et la membrane auxiliaire (43) présentent des pores dont le diamètre est compris entre < 10 nm et > 0, 14 nm.

19. Dispositif selon les revendications 17 et 18, caractérisé en ce que la membrane de dépôt (33) et la membrane auxiliaire (43) sont constituées d'une matière synthétique poreuse.

20. Dispositif selon l'une quelconque des revendications précédentes, caractérisé en ce que les électrodes (35, 39) sont en métal précieux.

21. Dispositif selon la revendication 20, caractérisé en ce que les électrodes (35, 39) sont en platine.

22. Dispositif selon l'une quelconques des revendications 17 à 19, caractérisé en ce que les électrodes (35, 39) sont constituées d'un matériau non métallique électriquement conducteur.

23. Dispositif selon la revendication 22, caractérisé en ce que les électrodes (35, 39) sont en graphite.
